# EUROPEAN PATENT APPLICATION

(11) **EP 2 112 616 A2**
(43) Date of publication of application: **28.10.2009**
(21) Application number: 08253949.5
(22) Date of filing: 10.12.2008
(51) Int. Cl.: G06F 21/20

(54) **Content transfer system and method, and home server**

(30) Priority: 24.04.2008 JP 2008114471
(71) Applicant: Hitachi Ltd., Chiyoda-ku Tokyo (JP)
(72) Inventor: Kodama, Shoji, Chiyoda-ku Tokyo 100-8220 (JP); Iwami, Naoko, Chiyoda-ku Tokyo 100-8220 (JP)
(74) Representative: Moore, Graeme Patrick

(57) **Abstract**

When an authentication request is made, processing for the authentication request is executed based on information about a first device even if account information set for a first storage system does not exist.

When information is exchanged between a home storage system 10 and an online storage system 18 via the Internet 20, and if account information does not exist due to, for example, replacement with a new device, when making an authentication request, the home storage system 10 collects content relating to the relevant device and transfers both to the online storage system 18; and if the content collected by the home storage system 10 matches key-content recorded as authentication information, the online storage system 18 transfers the recorded account information to the home storage system 10. The home storage system 10 can execute user authentication processing by using the account information transferred from the online storage system 18.

## Description

This application relates to and claims priority from Japanese Patent Application No. 2008-114471, filed on April 24, 2008, the entire disclosure of which is incorporated herein by reference.

The invention relates to a content transfer technique required when a first storage system requests authentication from a second storage system when exchanging content between the first storage system and the second storage system via a communication network.

As the quality of moving image content such as broadcasted television programs and motion pictures has improved, the content data size has been increasing in recent years. Also, a storage system with a large capacity of several terabytes (TB) can now be utilized at inexpensive cost at home to record a large amount of moving-image content and store it in a home storage system.

Japanese Patent Application Laid-open (Kokai) Publication No. 2005-31804 discloses a system connected via the Internet to an accounting and settlement service provider providing an accounting and settlement service in cooperation with download sites and online storage systems at content storage service sites for accumulating content uploaded by users (such as music servers, home servers, and televisions at home).

Japanese Patent Application Laid-open (Kokai) Publication No. 2004-192602 discloses a technique to perform data backups by periodically transmitting data, which is updated and accumulated by a home server for controlling and managing a home network connected to many household electrical appliances, to a portal server connected via the Internet to the home server and to thereby automatically restore lost data upon the occurrence of a malfunction of the home server, using backup data at the portal server.

Meanwhile, online storage system services have appeared as new services on the Internet. These are a fee-based or free services that lend storage capacity that can be used via the Internet. For example, content at home can be backed-up by copying it to an online storage system. Once the content is migrated to the online storage system, the content at the home storage system can be deleted and, therefore, unused storage capacity in the home storage system can be increased.

The home storage system at home is connected to the Internet, using a communication line the relevant household has a contract for with a communications provider. As a result of the spread of broadband lines, a large amount of data at large bandwidths ranging from several megabits per second (Mbps) to several tens of megabits per second (Mbps) can now be utilized. However, while the data download speed of the line at home connected to the Internet is fast, the speed of uploading data to a server on the Internet is slow. This is because the main use of the Internet at home has been downloading content.

If a user uses the home storage system to register account information, including an account name and a password, with the online storage system, that account information set for the home storage system will be used for any subsequent authentication request. Therefore, in order to backup the content at home to the online storage system, the account information required for the authentication request can be transferred from the home storage system to the online storage system without requiring the user to input the account name and password again.

However, if the user forgets their registered password when, for example, the home storage system is replaced, he can no longer utilize services for the online storage system, using a new home storage system. If the user forgets his password or similar, he needs to follow necessary user identification procedures, for example, by telephone or by mail.

On the other hand, it is also possible to utilize, instead of account information such as a password, a configuration that uses a machine for reading finger veins and makes the read finger veins the account information. However, a finger vein-reading machine is expensive and it is difficult to mount this machine on a home storage system or a cell phone.

It is a preferred aim of the present invention to provide a content transfer system and method and a home server that can process an authentication request based on information about a first device when the authentication request is made by a first storage system to a second storage system and even if the account information set for the first storage system does not exist.

The above-described aim is preferably achieved according to an aspect of the invention in such a manner that when exchanging information via a communication network between a first storage system for managing and recording first content obtained from a first device, and a second storage system for recording second content and managing the first content, if there is no account information when making an authentication request, the first storage system preferably collects, when account information is not input, information relating to the first device, preferably attaches the collected information to the authentication request, and preferably transfers both to the second storage system; and wherein the second storage system preferably judges, in response to the authentication request, whether or not the information attached to the authentication request matches authentication information recorded corresponding to the first storage system; and then preferably transfers the judgment result to the first storage system.

Furthermore, if there is no account information due to, for example, replacement of the first storage system when making an authentication request, the first storage system may execute account recovery processing by collecting content or device information, which is information relating to the first device, and preferably transfers the collected content or device information to the second storage system; and when the content or device information collected by the first storage system matches key-content recorded as authentication information, the second storage system preferably transfers the recorded account information to the first storage system. As a result, the first storage system can execute user authentication processing (user identification) for a user who uses the first storage system, by utilizing the account information transferred from the second storage system.

When the first storage system makes an authentication request to the second storage system, even if there is no account information set for the first storage system, the authentication request can be processed according to this invention based on the information about the first device.

Other aims, aspects and advantages of the invention will be apparent from the following description and the appended claims.

### Brief Description of the Drawings

Fig. 1 is a block diagram of a content transfer system according to the first embodiment of the present invention.

Fig. 2 is a configuration diagram of device-specific information about each storage unit.

Fig. 3 is a configuration diagram of a content management table for each device.

Fig. 4 is a configuration diagram of account information about a home storage system.

Fig. 5 is a configuration diagram of a device management table for the home storage system.

Fig. 6 is a configuration diagram of a content management table for the home storage system.

Fig. 7 is a configuration diagram of user identification setting information about an online storage system.

Fig. 8 is a configuration diagram of an account management table for the online storage system.

Fig. 9 is a configuration diagram of a content management table for the online storage system.

Fig. 10 is a configuration diagram of a device management table for the online storage system.

Fig. 11 is a flowchart illustrating processing for an account registration function and an account management function.

Fig. 12 is a flowchart illustrating processing for a login function and an account authentication function.

Fig. 13 is a flowchart illustrating processing for an account recovery function.

Fig. 14 is a flowchart illustrating processing for a device discovery function.

Fig. 15 is a flowchart illustrating processing for a content collection function.

Fig. 16 is a flowchart illustrating processing for a backup function.

Fig. 17 is a flowchart illustrating processing for a restoration function.

Fig. 18 is a flowchart illustrating processing for a user identification function.

Fig. 19 is a flowchart illustrating processing for a backup server function.

Fig. 20 is a flowchart illustrating processing for a key-content determination function.

Fig. 21 is a flowchart illustrating processing for a restoration server function.

Fig. 22 shows the relationship between components, functions, and tables used for the functions.

Fig. 23 is a flowchart illustrating the entire operation of the first embodiment.

Fig. 24 is a flowchart illustrating another method of processing for the account recovery function.

Fig. 25 is a flowchart illustrating another method of processing for the user identification function.

Fig. 26 is a block diagram of a content transfer system according to the second embodiment of this invention.

Fig. 27 is a flowchart illustrating the operation of the second embodiment.

### First Embodiment

A content transfer system according to the first embodiment of the present invention will be explained with reference to the attached drawings.

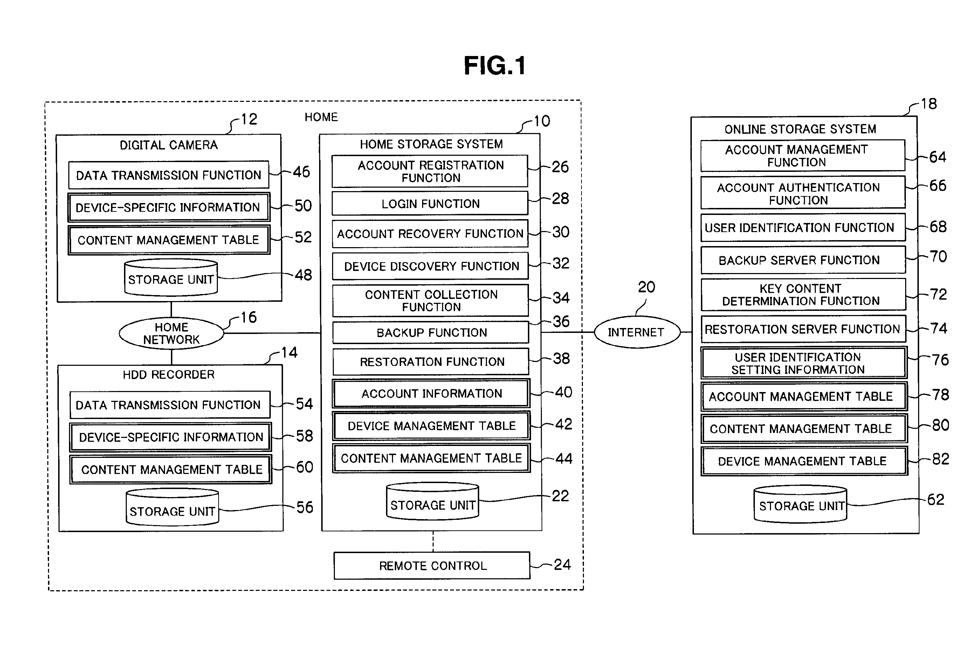

Fig. 1 is a block configuration diagram illustrating the outline of the content transfer system. Referring to Fig. 1, the content transfer system is composed of: a home storage system 10, a recording device such as a digital camera 12, an HDD (Hard Disk Drive) recorder 14, a home network 16 for connecting the above-listed devices, an online storage system 18, and the Internet 20 as a communication network for connecting the home storage system 10 and the online storage system 18.

The home storage system 10 includes: a computer that serves as a first storage system (storage apparatus) or a home server for recording and managing first content relating to a first device and executes processing for a user to record, collect, watch and listen to television programs and for requesting, for example, content backup and restoration to the online storage system 18; a storage unit 22 for storing the first content and various programs; a remote control 24; an interface for performing data input/output processing (not shown in the drawing); and a display (not shown in the drawing). The interface is connected to the home network 16 and the Internet 20.

The home storage system 10 has, as functions to be executed by the computer using various programs, an account registration function 26, a login function 28, an account recovery function 30, a device discovery function 32, a content collection function 34, a backup function 36, and a restoration function 38. The storage unit 22 stores account information 40 and information about a device management table 42 and a content management table 44.

The digital camera 12 is equipped with a computer having a data transmission function 46 besides a photographing function of shooting photographic subjects and digitalizing taken images; and the digital camera 12 is also configured as a first device having a storage unit 48 and an interface for executing data input/output processing. The interface is connected to the home network 16. The storage unit 48 stores device-specific information 50 and information about a content management table 52. In other words, the storage unit 48 stores the device-specific information 50 and the content management table 52 as information about the first content of the first device.

The HDD recorder 14 is equipped with a recording and reproduction mechanism for recording and reproducing data and a computer that executes data recording and reproduction processing and has a data transmission function 54; and the HDD recorder 14 is also configured as the first device having an interface for executing data input/output processing and a storage unit 56 for accumulating input data as data relating to the first device. The interface is connected to the home network 16. The storage unit 56 stores device-specific information 58 and a content management table 60 as information about the first content of the first device.

Meanwhile, the online storage system 18 is composed of a computer that serves as a second storage system or a management server (online server) for recoding the second content, managing the first content of the home storage system 10, and exchanging information with the home storage system 10 via the Internet 20, and that stores content transferred from the home storage system 10 and executes processing for responding to requests from the home storage system 10; an interface for executing information input/output processing; and a storage unit 62 for storing, for example, the second content.

The online storage system 18 has, as functions to be implemented by the computer for executing various programs, an account management function 64, an account authentication function 66, a user identification function 68, a backup server function 70, a key-content determination function 72, and a restoration server function 74. The storage unit 62 stores user identification setting information 76 and information about an account management table 78, a content management table 80, and a device management table 82.

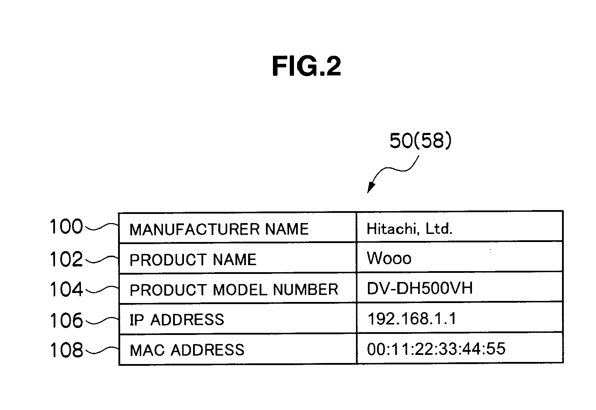

Fig. 2 shows an example of the device-specific information 50 stored in the storage unit 48 for the digital camera 12 and of the device-specific information 58 stored in the storage unit 56 for the HDD recorder 14. The device-specific information 50, 58 includes a manufacturer name field 100, a product name field 102, a product model number field 104, an IP address field 106, and a MAC address field 108. The manufacturer name field 100 stores information about the name of the manufacturer of the relevant device; the product name field 102 stores information about the product name of the relevant device; the product model number field 104 stores information about the product model number of the relevant device; the IP address field 106 stores information about the IP address of the relevant device; and the MAC address field 108 stores information about the MAC address of the relevant device.

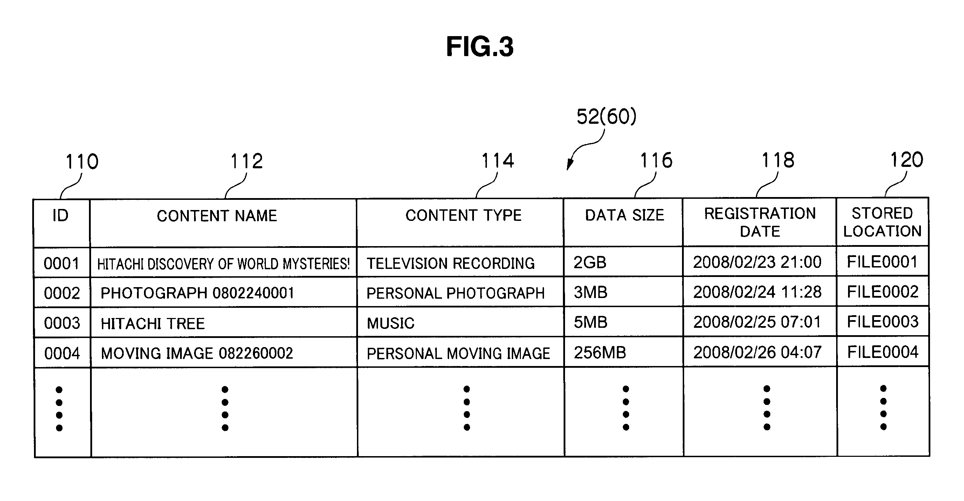

Fig. 3 shows an example of the content management table 52 stored in the storage unit 48 for the digital camera 12 and of the content management table 60 stored in the storage unit 56 for the HDD recorder 14. The content management table 52, 60 includes an ID field 110, a content name field 112, a content type field 114, a data size field 116, a registration date field 118, and a stored location field 120. The ID field 110 stores a unique identification number of each device for identifying the relevant device. The ID field 110 stores, for example, "0001" as the ID number for identifying the HDD recorder 14 and "0002" as the ID number for identifying the digital camera 12.

The content name field 112 stores the content name of content obtained from the digital camera 12 or the HDD recorder 14; and the content type field 114 stores the content type showing whether the relevant content is the user's own specific content or other types of content. The data size field 16 stores the capacity for each content item; the registration date field 118 stores the date and time of registration for each content item; and the stored location field 120 stores the file number indicating the stored location of each content item.

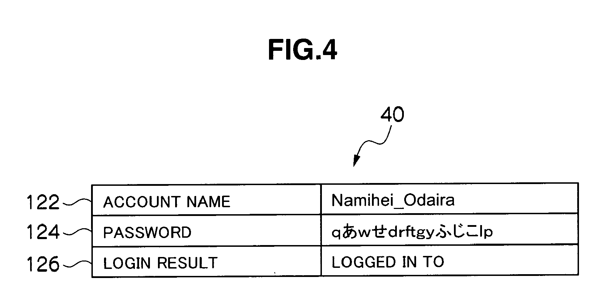

Fig. 4 shows an example of the account information 40 stored in the storage unit 22 for the home storage system 10. The account information 40 includes a field 122 for storing an account name of the relevant account information, a field 124 for storing a password for the account information, and a field 126 for storing the login result.

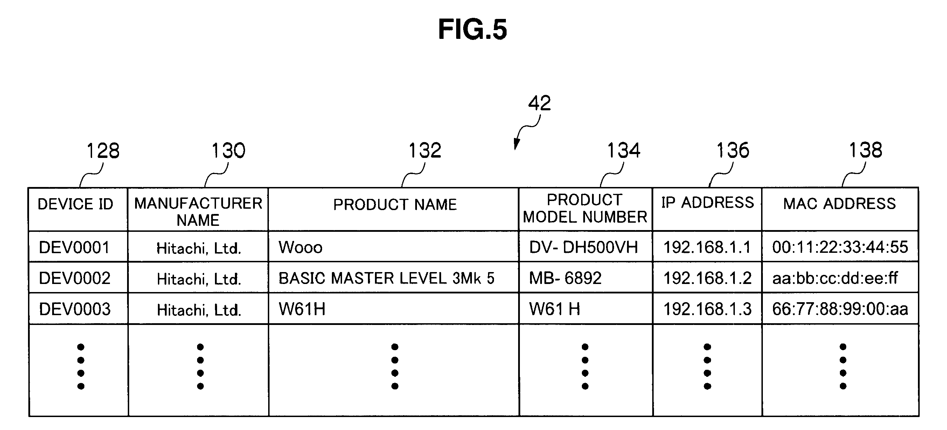

Fig. 5 shows an example of the device management table 42 stored in the storage unit 22 for the home storage system 10. The device management table 42 includes a device ID field 128, a manufacturer name field 130, a product name field 132, a product model number field 134, an IP address 136, and a MAC address field 138.

The device ID field 128 stores the number for identifying the relevant device, such as the digital camera 12 or the HDD recorder 14; the manufacturer name field 130 stores the name of the manufacturer of the relevant device; the product name field 132 stores the product name for the relevant device; the product model number field 134 stores the product model number for the relevant device; the IP address field 136 stores the IP address for the relevant device; and the MAC address field 138 stores the MAC address for the relevant device.

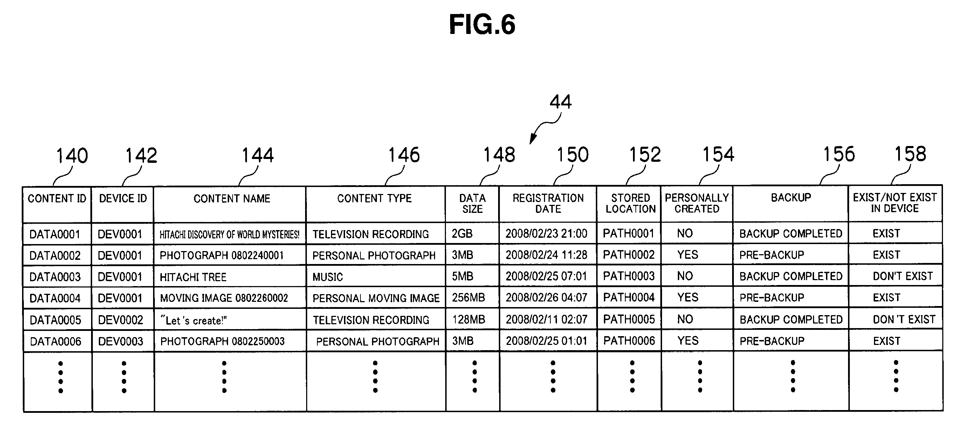

Fig. 6 shows an example of the content management table 44 stored in the storage unit 22 for the home storage system 10. The content management table 44 includes a content ID field 140, a device ID field 142, a content name field 144, a content type field 146, a data size field 148, a registration date field 150, a stored location field 152, a "personally created" field 154, a backup field 156, and an "exist/not exist in device?" field 158.

The content ID field 140 stores information about the ID for identifying the relevant content; and the device ID field 142 stores information for identifying the relevant device. The content name field 144 stores the name of the relevant content; the content type field 146 stores information about the type of the relevant content, such as a motion image personally created (by a user), a personally taken photograph, and non-personal television recording; and the data size field 148 stores the capacity for the relevant content.

The registration date field 150 stores the date and time of registration of the relevant content; the stored location field 152 stores the stored location of the relevant content; the "personally created" field 154 stores "YES" if the relevant content is personally created by the user, or "NO" if the relevant content is created by an entity other than the user; the backup field 156 stores information indicating "backup completed" if the relevant content is backed-up to the online storage system 18, or otherwise the backup field 156 stores information indicating "pre-backup"; and the "exist/not exist in device?" field 158 stores information indicating whether information about the relevant content exists in the storage unit 22 or not.

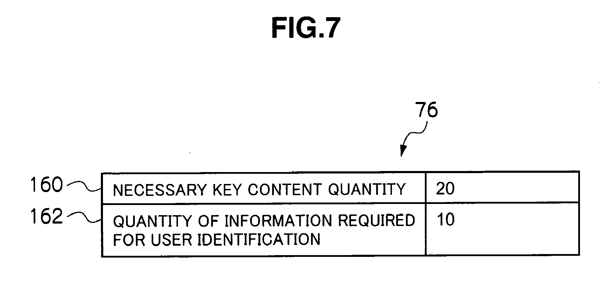

Fig. 7 shows an example of the user identification setting information 76 stored in the storage unit 62 for the online storage system 18. The user identification setting information 76 includes a field 160 for storing the total number of key-content items, and a field 162 for storing the minimum number of key-content items for authentication. These pieces of information can be used as information capable of identifying the user when ten key-content items, which is the minimum number of key-content items for authentication, from among twenty content items, which is the total number of key-content items, have matched the transferred content.

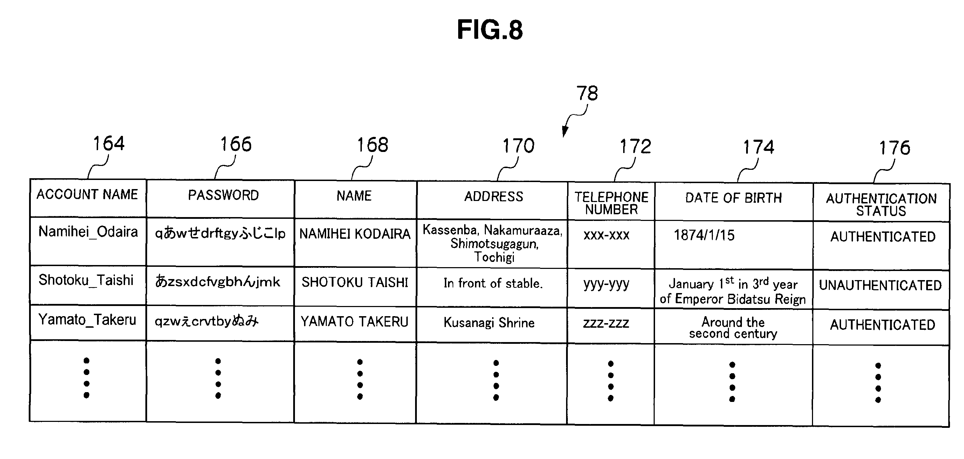

Fig. 8 shows an example of the account management table 78 stored in the storage unit 62 for the online storage system 18. The account management table 78 includes an account name field 164, a password field 166, a name field 168, an address field 170, a telephone number field 172, a date-of-birth field 174, and an authentication status field 176.

The account name field 164 stores an account name transferred as the account information from the home storage system 10 when an account registration request is made by the home storage system 10; and the password field 166 stores a password transferred as the account information from the home storage system 10. The name field 168 stores the user's own name associated with the account name and the password; the address field 170 stores the user's address; the telephone number field 172 stores the user's telephone number; the date-of-birth field 174 stores the user's date of birth; and the authentication status field 176 stores information indicating whether authentication about the user has been registered or not.

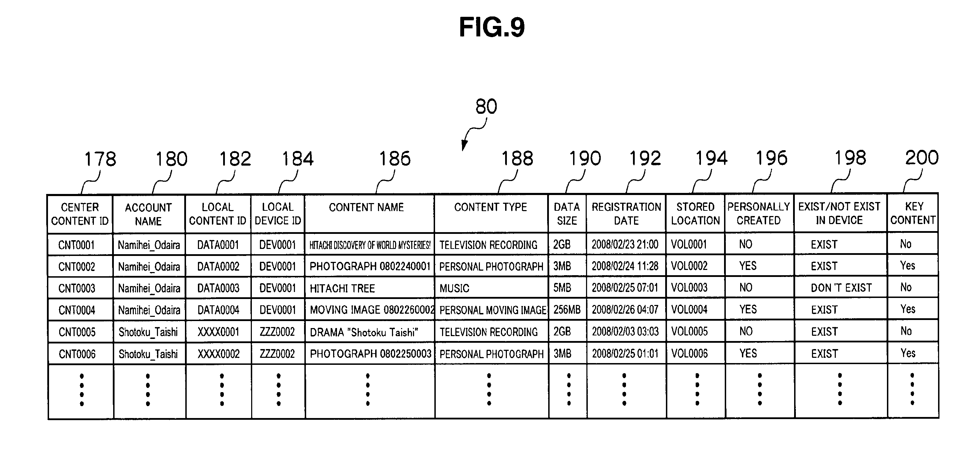

Fig. 9 shows an example of the content management table 80 stored in the storage unit 62 for the online storage system 18. The content management table 80 includes a center content ID field 178, an account name field 180, a local content ID field 182, a local device ID field 184, a content name field 186, a content type field 188, a data size field 190, a registration date field 192, a stored location field 194, a "personally created" field 196, an "exist/not exist in device?" field 198, and a key-content field 200.

The center content ID field 178 stores the ID number for identifying the relevant center content; the account name field 180 stores the account name transferred from the home storage system 10; the local content ID field 182 stores the ID number for identifying the relevant content of a local device such as the digital camera 12 or the HDD recorder 14; and the local device ID field 184 stores the number for identifying the digital camera 12 or the HDD recorder 14.

The content name field 186 stores the name of the relevant content; the content type field 188 stores information for identifying the details of the content, such as television recording or personal moving image; and the data size field 190 stores the capacity of the relevant content. The registration date field 192 stores the date and time of registration of the relevant content; the stored location field 194 stores the stored location of the relevant content; the "personally created" field 196 stores "YES" if the relevant content is personally created by the user, or "NO" if the relevant content is created by an entity other than the user; the "exist/not exist in device?" field 198 stores information indicating whether the relevant content exists in the storage unit 62 or not; and the key-content field 200 stores "YES" if the key-content is determined, or otherwise stores "No."

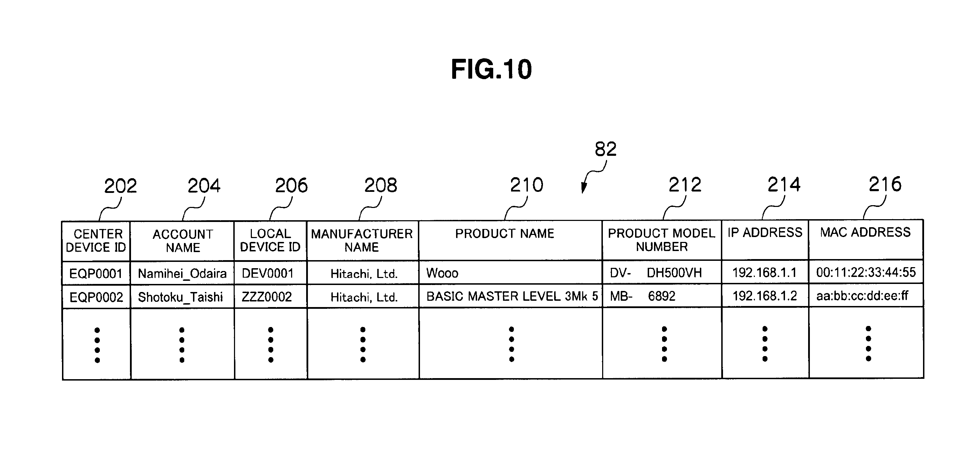

Fig. 10 shows an example of the device management table 82 stored in the storage unlit 62 for the online storage system 18. The device management table 82 includes a center device ID field 202, an account name field 204, a local device ID field 206, a manufacturer name field 208, a product name field 210, a product model number field 212, an IP address field 214, and a MAC address field 216.

The center device ID field 202 stores the ID number for identifying the relevant center device; the account name field 204 stores the account name transferred from the home storage system 10; and the local device ID field 206 stores the device ID number for identifying the relevant device such as the digital camera 12 or the HDD recorder 14. The manufacturer name field 208 stores the name of the manufacturer of the digital camera 12 or the HDD recorder 14 as the name of the manufacturer of the relevant local device; the product name field 210 stores the product name of the relevant local device; the product model number field 212 stores the product model number of the relevant local device; the IP address field 214 stores the IP address of the relevant local device; and the MAC address field 216 stores information about the MAC address of the relevant local device.

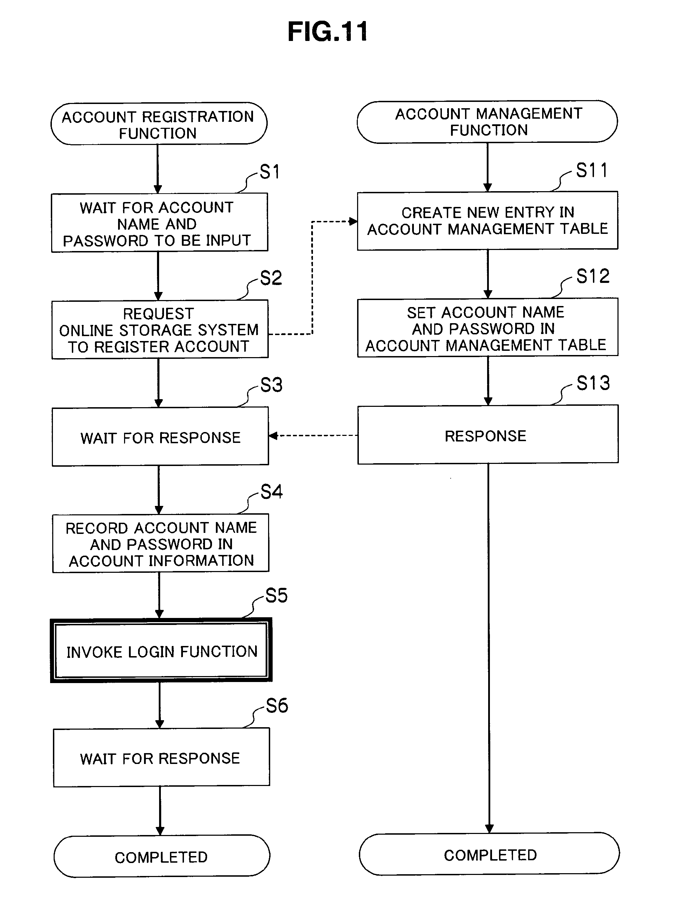

Next, processing for the account registration function 26 of the home storage system 10 and the account management function 64 of the online storage system 18 will be explained below following the flowchart in Fig. 11. When making an account registration request in accordance with input from the user, the computer for the home storage system 10 first executes processing for prompting the user to input an account name and a password on a display screen waiting for input of the account name and the password (step S1); and if the user inputs the account name and the password, the computer sets the entered account name and password as user-specific account information and attaches that account information to the account registration request and transfers both to the online storage system 18 (step S2). Subsequently, the computer enters a state of waiting for a response from the online storage system 18 (step S3).

On the other hand, when the computer for the online storage system 18 receives the account registration request, the computer creates a new entry in the account management table 78 in response to the account registration request (step S11), and sets and registers the account name and the password, as the account information transferred from the home storage system 10, in the new entry (step S12). Subsequently, the computer transfers response information indicating that the account information is registered with the account management table 78, to the home storage system 10 (step S13), and then terminates the processing in this routine.

If the computer for the home storage system 10 receives the response information from the online storage system 18 while it is in the response-waiting state, the computer records that the account name and password which were set upon the account registration request have been registered with the online storage system 18 (step S4), invokes the login function 28 (step S5), waits for a response (step S6), and then terminates the processing in this routine.

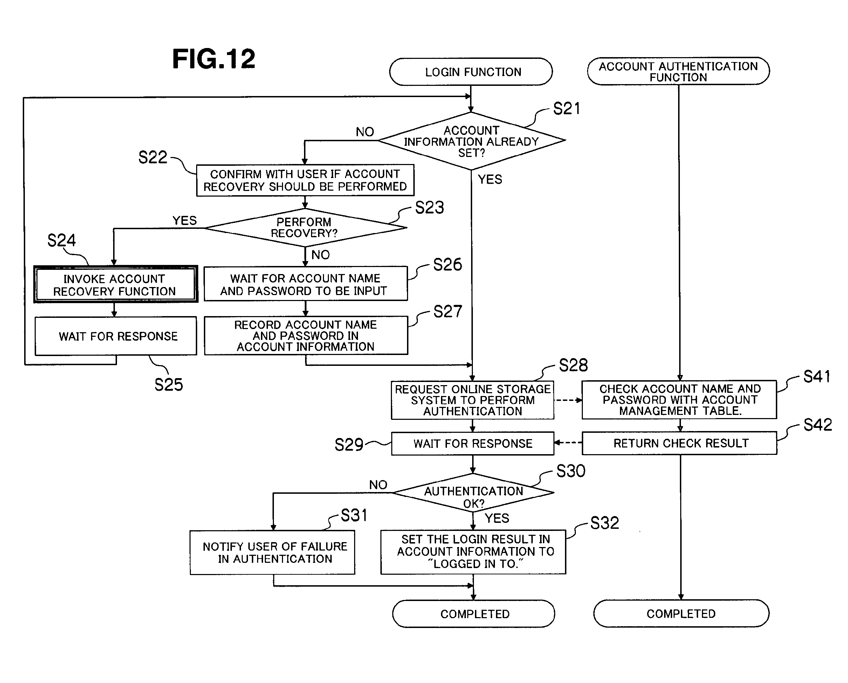

Next, processing for the login function 28 of the home storage system 10 and the account authentication function 66 of the online storage system 18 will be explained following the flowchart in Fig. 12. First, the computer for the home storage system 10 activates a login program and judges, as processing for an authentication request, whether the account information has been already set or not (step S21). If the account information has been sent and registered, the judgment results in "already set" and the processing proceeds to step S28.

On the other hand, if the computer makes a judgment that the account information has not been set (for example, when a new home storage system 10 is purchased and no account information exists), the computer displays an image on the display to prompt the user to select account recovery as selection processing for confirming with the user if the account recovery should be performed or not (step S22).

Subsequently, the computer judges in accordance with the user's input via the screen whether the account recovery should be performed or not (step S23). If account recovery is selected by the user, the computer executes processing for invoking the account recovery function 30 (step S24), then executes response-waiting processing (step S25), and returns to the processing in step S21.

On the other hand, if the computer determines in step S23, according to the result of the user's selection input, that the account recovery is not to be performed, the computer displays an image on the display to prompt the user to input the account information, including an account name and a password, as the result of the input-prompting processing (step S26). If the user inputs the account name and the password, the computer records the entered account name and password as the account information (step S27), attaches the recorded account information to the authentication request and transfers both to the online storage system 18 (step S28), and then executes the response-waiting processing (step S29).

When receiving an authentication request from the home storage system 10, the computer for the online storage system 18, in response to the authentication request, searches the account management table 78 based on the account information, including the account name and the password, attached to the authentication request, and checks the account name and the password with the account management table 78 (step S41), returns the check result to the home storage system 10 (step S42), and then terminates the processing in this routine.

Meanwhile, after receiving the check result from the online storage system 18, the computer for the home storage system 10 in the response-waiting state judges, based on the check result, whether authentication is OK or not (step S30). If the authentication has failed, the computer notifies the user to that effect (step S31); or if the authentication has succeeded, the computer sets the login result in the account information to "logged in to" (step S32), and then terminates the processing in this routine.

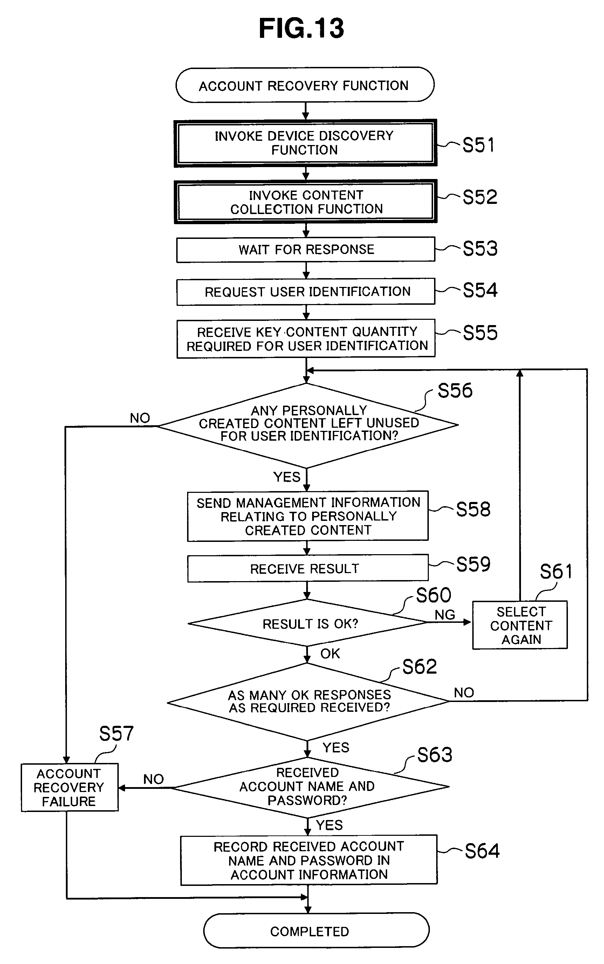

Next, processing for the account recovery function 30 of the home storage system 10 will be explained following the flowchart in Fig. 13.

First, as processing to be executed if a new home storage system 10 is installed, for example, upon the occurrence of a failure of the old home storage system 10, and if the account information does not exist, the computer for the home storage system 10 executes processing for invoking the device discovery function 32 (S51), then executes processing for invoking the content collection function 34 (S52), followed by the response-waiting processing (S53) and then user identification request processing as login processing for implementation of the account recovery function (S54), and then receives the key-content quantity required for identification of the user (S55). Specifically speaking, the home storage system 10 collects key-content required for the user identification from a local device under the control of the home storage system 10 and judges whether or not there is any personally created content left unused for the user identification (S56); and if there is no such personally created content left unused, the computer for the home storage system 10 recognizes that the account recovery has failed (S57), and then terminates the processing in this routine.

On the other hand, if the computer determines that there is some personally created content left unused for the user identification, the computer sends management information relating to the personally created content to the local device (S58), then receives the result from the local device (S59), and judges whether the received result is OK or not (S60); and if the result is "NG" ["No Good"], the computer executes processing for reselecting the content (S61) and returns to the processing in step S56.

If the result is "OK," the computer judges whether or not as many OK responses as required have been received for the personally created content (S62). If a negative judgment result is returned in S62, the computer returns to the processing in step S56; and if an affirmative judgment result is returned in S62, the computer judges whether or not the account information including the account name and the password has been received from the online storage system 18 (S63). If the receipt of the account information has failed, the computer executes account recovery failure processing (S57) and then terminates the processing in this routine; or if the account information has been successfully received, the computer records the account name and the password in the account information (S64), and then terminates the processing in this routine.

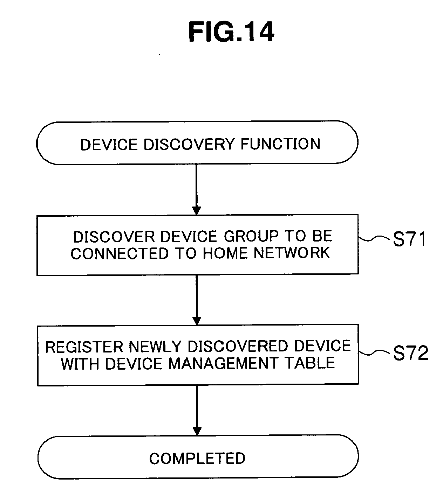

Next, processing for the device discovery function 32 of the home storage system 10 will be explained below following the flowchart in Fig. 14. As processing for discovering a device group connected to the home network 16, the computer for the home storage system 10 inputs information about production numbers of equipment as content and device information about the digital camera 12 and the HDD recorder 14 (S71), registers a newly found device with the device management table 42 (S72), and then terminates the processing in this routine.

There are also other methods for discovering devices as follows: (1) a method of manually inputting the IP addresses and other information about the existing devices into the home storage system 10 in advance and then inquiring about IP addresses when a new device is found as a result of discovery processing; and (2) a method of inquiring about all the IP addresses within the subnetwork constituting the home network 16. If the account recovery is carried out only for the device information, the production number(s) and other necessary information about the relevant product(s) that cannot be acquired via the network are manually input by the above method (1). As a result, the possibility of unauthorized acquisition of the account information by means of account recovery by a third person can be reduced.

The home storage system 10 can also detect, other than in the case of the account discovery, when a device is connected to the home network 16 and perform the content collection function 34 for that device.

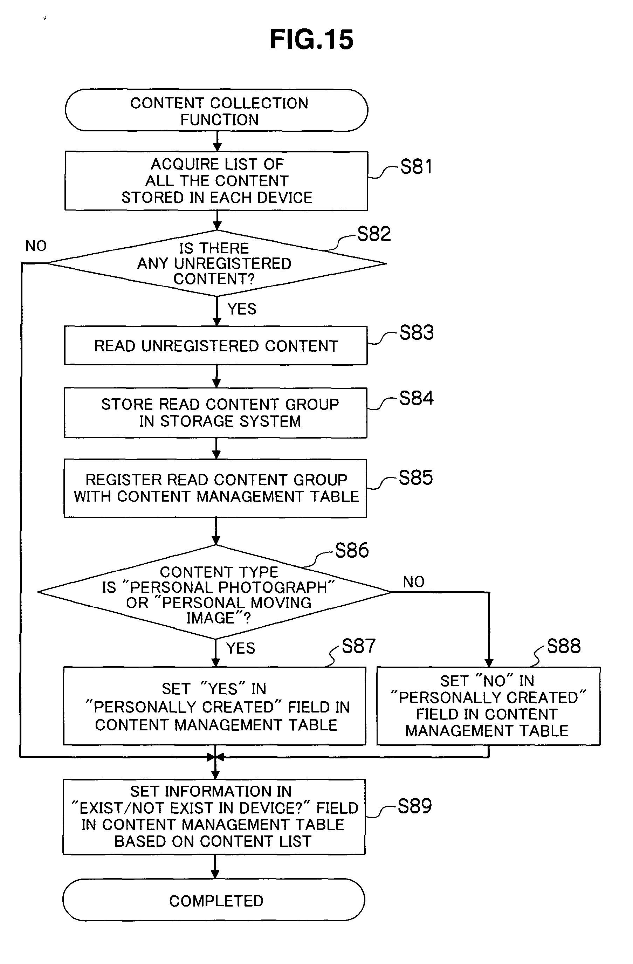

Next, processing for the content collection function 34 of the home storage system 10 will be explained below following the flowchart in Fig. 15. The computer for the home storage system 10 acquires a list of all the content stored in each device throughout the home network 16 (S81), compares the acquired list with the collected content in each device and judges whether there is any unregistered content or not (S82). If the computer determines that there is no unregistered content, it proceeds to processing in step S89; or if there is some unregistered content, the computer reads the unregistered content (S83), stores the read content group in the storage unit 22 (S84), registers the read content group with the content management table 44 (S85), and then judges the content type as to whether it is "personal photograph" or "personal moving image" (S86).

If the computer determines that the content type is "personal photograph," the computer sets "YES" in the "personally created" field in the content management table 44; or if the computer determines that the content type is "personal moving image," the computer sets "NO" in the "personally created" field in the content management table 44 (S88), and then sets and records information in the "exist/not exist in device?" field in the content management table 44 based on the content list (S89), and then terminates the processing in this routine.

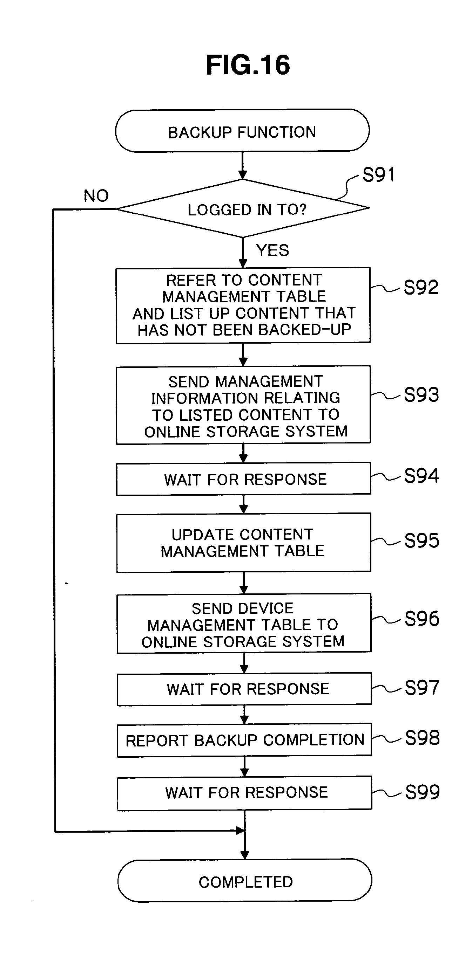

Next, processing for the backup function 36 of the home storage system 10 will be explained below following the flowchart in Fig. 16.

As processing to be executed when making a backup request, the computer for the home storage system 10 judges whether or not the system is logged in to or not (S91); and if the system is not logged in to, the computer terminates the processing in this routine; or if the computer determines that the system is logged in to, and if the content collection function 34 has been performed, the computer refers to the content management table 44 and lists content that has not been backed-up, for example, the content periodically collected by the home storage system 10 periodically from the device group, (S92); and the computer then attaches the management information relating to the listed content to the backup request and sends (transfers) both to the online storage system 18 (S93), and then executes the response-waiting processing (S94).

After the response-waiting processing, the computer updates the content management table 44 (S95), sends the device management table 42 information to the online storage system 18 (S96), executes the response-waiting processing (S97), reports backup completion (S98), then executes the response-waiting processing (S99), and then terminates the processing in this routine.

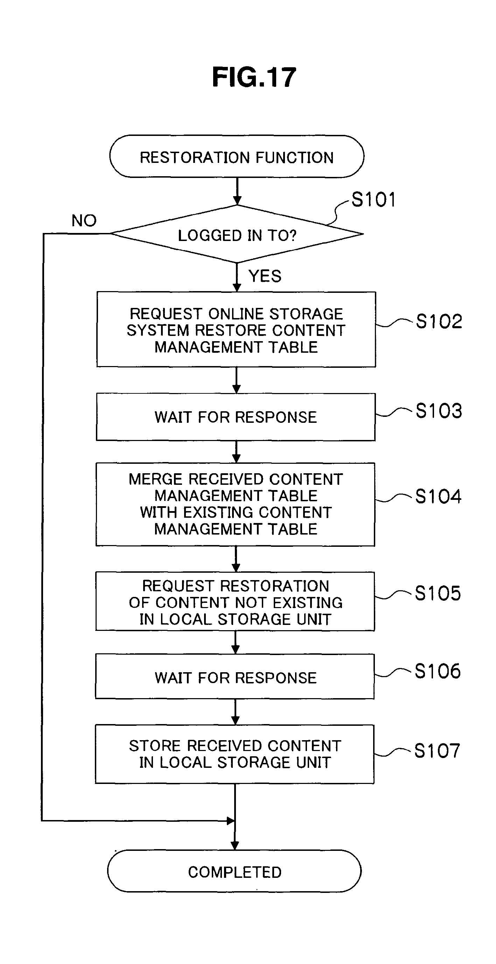

Next, processing for the restoration function 38 of the home storage system 10 will be explained below following the flowchart in Fig. 17.

When making a restoration request, the computer for the home storage system 10 first judges whether the system is logged in to or not (S101). If the system is not logged in to, the computer terminates the processing in this routine; or if the computer determines that the system is logged in to, the computer for the home storage system 10 makes a request to the online storage system 18 to restore the content management table 44 (S102) and then executes the response-waiting processing (S103). After the response-waiting processing, the computer executes processing for recording the content management table 80 information received from the online storage system 18, in the existing content management table 44 (S104), makes a request to the online storage system 18 to restore the content that does not exist in the local storage system (S105), then executes the response-waiting processing (S106), stores the content received from the online storage system 18 in the storage unit 22 (S107), and then terminates the processing in this routine.

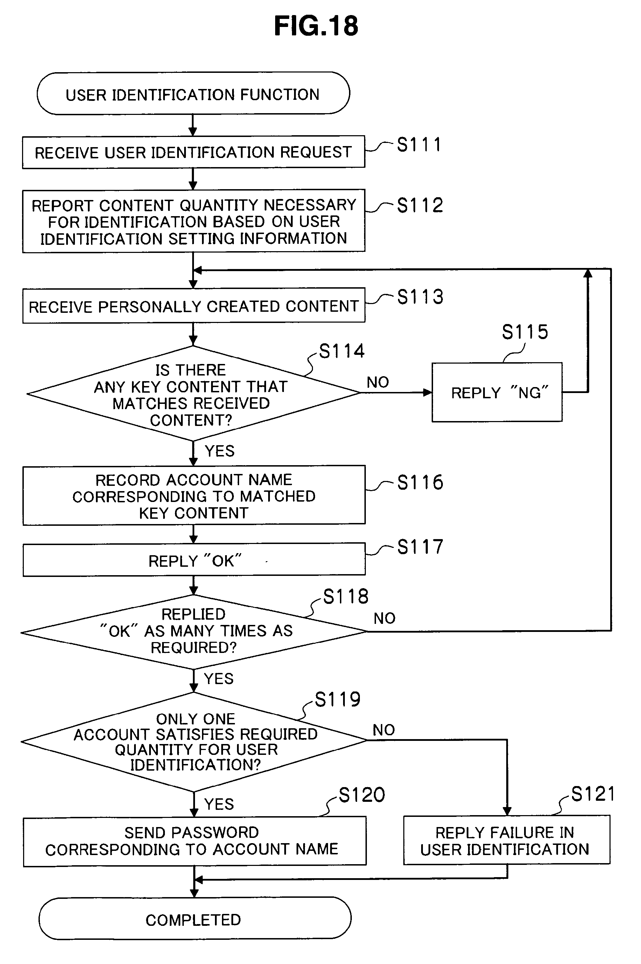

Next, processing for the user identification function 68 of the online storage system 18 will be explained below following the flowchart in Fig. 18.

When the computer for the online storage system 18 receives a user identification request from the home storage system 10 (S111), the computer notifies the home storage system 10 of the content quantity necessary for identification of the user based on the user identification setting information 76 (S112). After receiving personally created content from the home storage system 10 (S113), the computer for the online storage system 18 judges whether any key-content that matches the received content exists or not (S114); and if there is no key-content that matches the received content, the computer executes processing for replying "NG" to the home storage system 10 (S115).

If the computer determines that the key-content matches the received content, the computer records the account name corresponding to that key-content that matches the received content (S116), replies "OK" to the home storage system 10 (S117), and judges whether or not it has replied "OK" as many times as required for user identification (S118). If the computer determines that it has not replied "OK" as many times as required for the user identification, the computer returns to the processing in step S113; or if the computer determines that it has replied "OK" as many times as required for the user identification, the computer judges whether or not there is only one account that satisfies the minimum number of key-content items for authentication (S119). If an affirmative judgment is returned in S119, the computer sends the account name and its corresponding password as the account information to the home storage system 10; or if a negative judgment is returned in S119, the computer sends response information indicating that the user identification has failed, to the home storage system 10 (S121), and then terminates the processing in this routine.

Incidentally, when the computer judges in step S114 whether any key-content that matches the received content exists or not, the speed of the processing can be increased by judging the correspondence between the key-content and the received content at the bit level or by searching the content by using a hash value created from the content or metadata of the content.

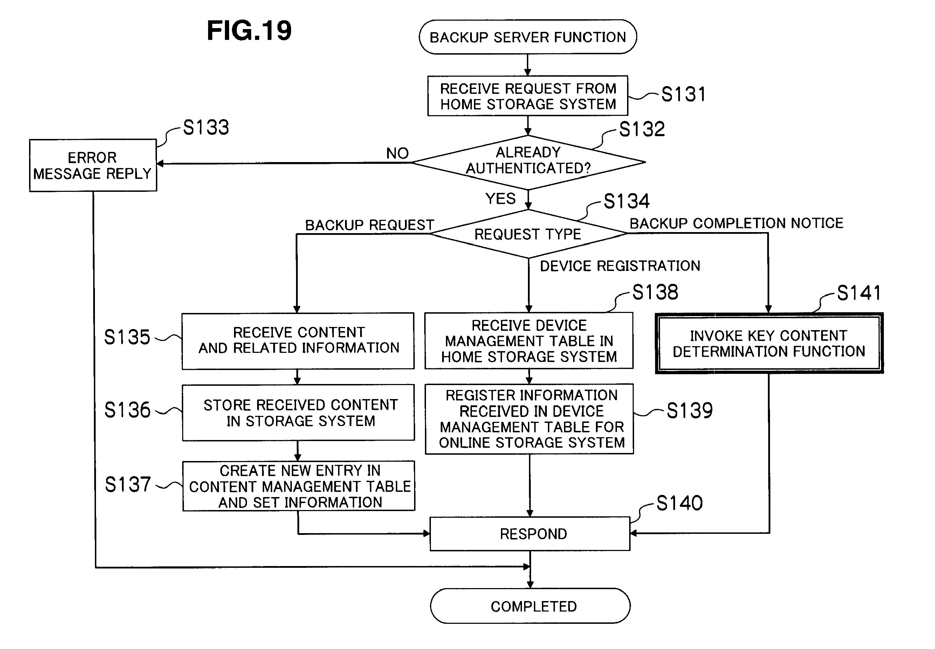

Next, processing for the backup server function 70 of the online storage system 18 will be explained below following the flowchart in Fig. 19.

After receiving a backup request from the home storage system 10 (S131), the computer for the online storage system 18 judges whether the request has already been authenticated or not (S132). If the request has not been authenticated, the computer sends an error message reply to the home storage system 10 (S133) and terminates the processing in this routine; or if the computer determines that the request has been authenticated, the computer judges the request type (S134).

If the computer determines that the request type is a backup request, the computer receives the content and related information (S135), stores the received content in the storage unit 62 (S136), creates a new entry in the content management table 80, sets and records information about the received content in the created new entry (S137), and then proceeds to processing in step S140.

If the computer determines that the request type is device registration, the computer receives the device management table 42 information for the home storage system 10 (S138), registers the received information in the device management table 82 (S139), executes processing for responding to the home storage system 10 (S140), and then terminates the processing in this routine.

If the computer determines in step S134 that the request type is a backup completion notice, the computer invokes the key-content determination function 72 (S141), executes processing for responding to the home storage system 10 (S140), and then terminates the processing in this routine.

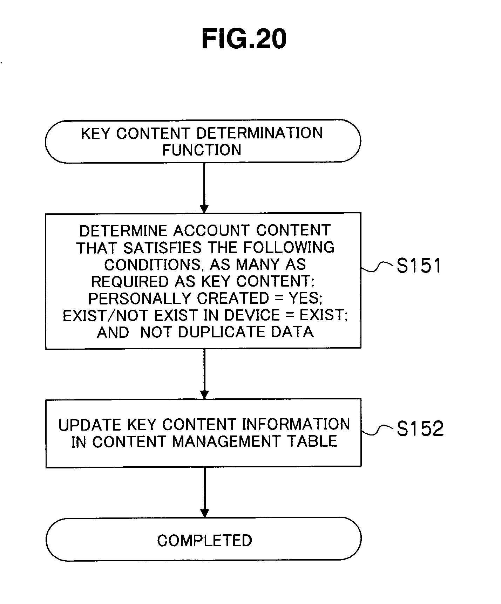

Next, processing for the key-content determination function 72 of the online storage system 18 will be explained below following the flowchart in Fig. 20.

The computer for the online storage system 18 executes processing for determining account content that satisfies the conditions described below, as many as the total number of key-content items (S151). The computer determines settings such as "personally created = YES; exist/not exist in device = exist; and not duplicate data" as many as the total number of key-content items. Subsequently, the computer updates the information about the key-content in the content management table 80 (S152) and then terminates the processing in this routine.

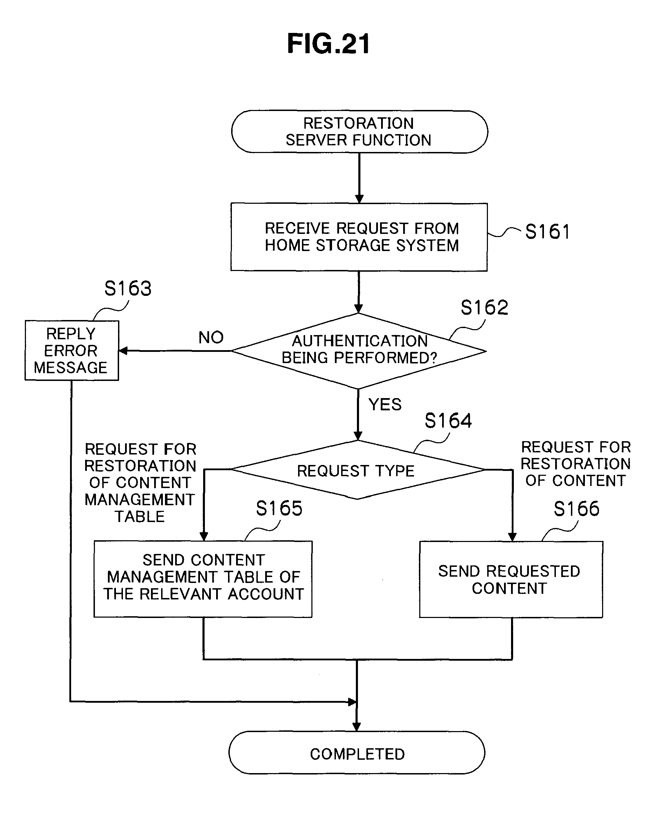

Next, processing for the restoration server function 74 of the online storage system 18 will be explained below following the flowchart in Fig. 21.

After receiving a restoration request from the home storage system 10 (S161), the computer for the online storage system 18 judges, in response to the restoration request, whether the request is being authenticated or not (S163). If the request is not being authenticated, the computer sends information about an error message reply to the home storage system 10 (S163) and terminates the processing in this routine; or if the computer determines that the request is being authenticated, the computer judges the request type (S164).

If the computer determines that the request type is a request for restoration of the content management table 80, the computer sends the content management table 80 information to the home storage system 10 (S165). On the other hand, if the computer determines that the request type is a content restoration request, the computer sends the requested content to the home storage system 10 (S166) and then terminates the processing in this routine.

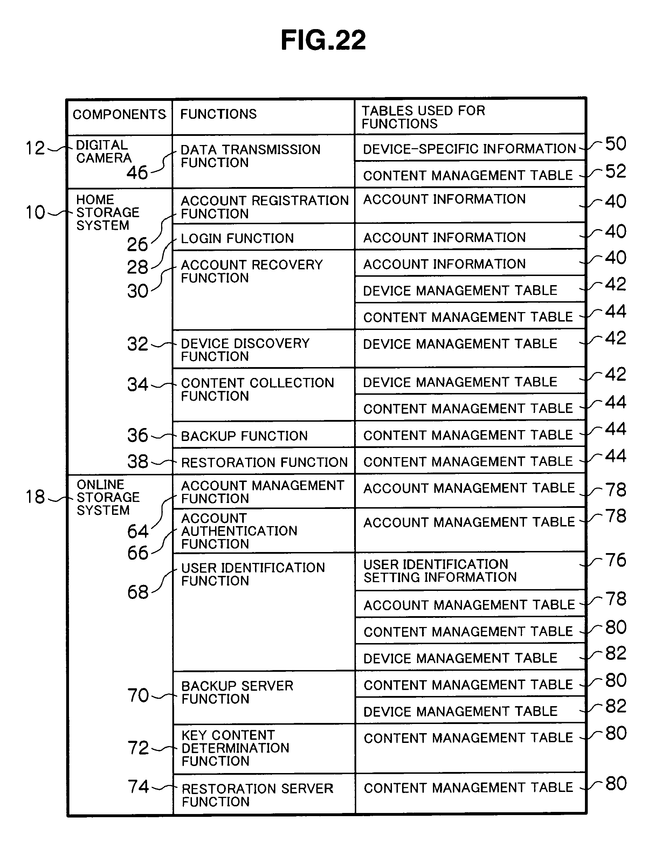

In order to execute the processing described above, each component uses the following functions, as shown in Fig. 22: the digital camera 12 uses the data transmission function 46; the home storage system 10 uses the account registration function 26, the login function 28, the account recovery function 30, the device discovery function 32, the content collection function 34, the backup function 36, and the restoration function 38; and the online storage system 18 uses the account management function 64, the account authentication function 66, the user identification function 68, the backup server function 70, the key-content determination function 72, and the restoration server function 74.

Furthermore, the data transmission function 46 uses the device-specific information 50 and the content management table 52. The account registration function 26 uses the account information 40; the login function 28 uses the account information 40; the account recovery function 30 uses the account information 40, the device management table 42, and the content management table 44; the device discovery function 32 uses the device management table 42; the content collection function 34 uses the device management table 42 and the content management table 44; the backup function 36 uses the content management table 44; and the restoration function 38 uses the content management table 44.

Moreover, the account management function 64 uses the account management table 78; the account authentication function 66 uses the account management table 78; the user identification function 68 uses the user identification setting information 76, the account management table 78, the content management table 80, and the device management table 82; the backup server function 70 uses the content management table 80 and the device management table 82; the key-content determination function 72 uses the content management table 80; and the restoration server function 74 uses the content management table 80.

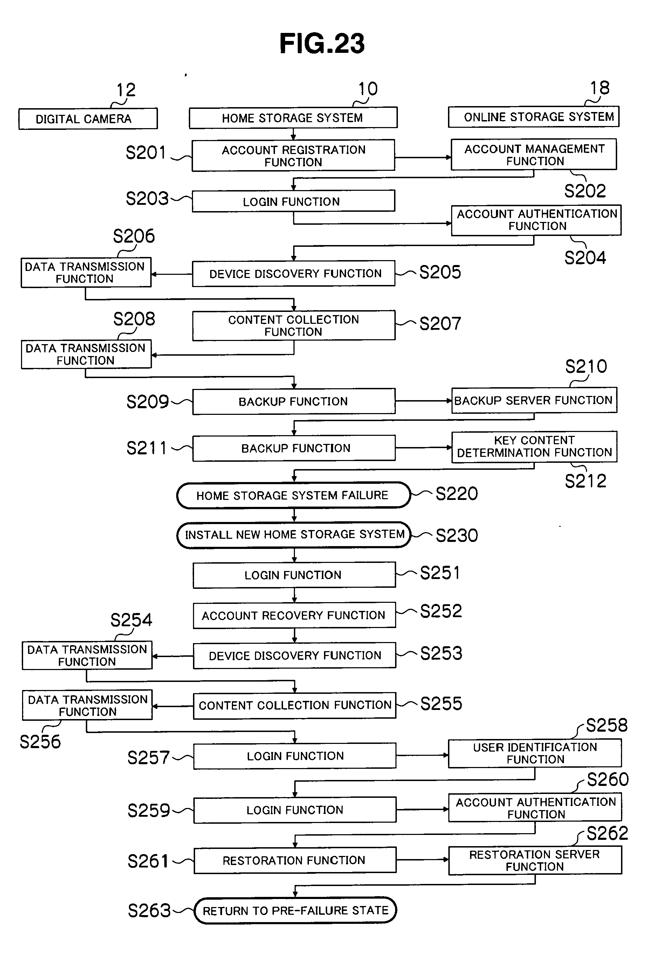

Next, processing for installing a new home storage system 10 upon, for example, the occurrence of a failure in the old home storage system 10 will be explained below as processing executed by the entire content transfer system with reference to the flowchart in Fig. 23. When making an account registration request, the computer for the home storage system 10 first performs the account registration function 26 (S201) and sends the account registration request to the online storage system 18. In response to the account registration request, the computer for the online storage system 18 performs the account management function 64 (S202) and sends the account information, including the account name and the password, which is input by the user, to the home storage system 10 (S202).

Subsequently, the computer for the home storage system 10 performs the login function 28 (S203) and sends the account information, which has been set, to the online storage system 18. In response to the login request, the computer for the online storage system 18 performs the account authentication function 66 (S204) and sends the authentication result to the home storage system 10. At this point in time, the computer for the home storage system 10 performs the device discovery function 32 (S205) and sends a discovery request to the digital camera 12 in order to collect content from the local device (S205).

The computer for the digital camera 12 performs the data transmission function 46 and sends the content of the digital camera 12 as the content of the local device, to the home storage system 10. When this happens, the computer for the home storage system 10 performs the content collection function 34 (S207) and sends a request to the digital camera 12 to collect the content.

The digital camera 12 performs the data transmission function 46 (S208) and sends the content of the digital camera 12 to the home storage system 10. The computer for the home storage system 10 performs the backup function 36 as processing to be executed when the backup request is made (S209); and the computer then sends the backup request to the online storage system 18. At this point in time, the computer for the home storage system 10 performs the backup function 36 (S211) and sends information about the backup target content to the online storage system 18. Subsequently, the computer for the online storage system 18 performs the key-content determination function 72, determines key-content for authenticating the user of the home storage system 10 based on the backup target content, and registers the determined key-content as the authentication information (S212).

If a failure occurs in the home storage system 10 (S220) and a new home storage system 10 is installed in place of the faulty home storage system 10 (S230), the computer for the newly installed home storage system 10 performs the login function 28 (S251) followed by the account recovery function 30 (S252) and then the device discovery function 32 (S253), and sends a device discovery request to the digital camera 12.

The digital camera 12 performs the data transmission function 46 (S254) and sends device information about the digital camera 12 to the home storage system 10. Subsequently, the computer for the home storage system 10 performs the content collection function 34 (S255) and sends a request to the digital camera 12 to collect the content of the device. The digital camera 12 performs the data transmission function 46 (S256) and sends information about the content of the digital camera 12 to the home storage system 10.

The computer for the home storage system 10 performs the login function 28 (S257), sends a user identification request to the online storage system 18, and executes processing from step S55 to step S63 as shown in Fig. 13. Meanwhile, the computer for the online storage system 18 performs the user identification function 68 (S258); and if the content sent from the home storage system 10 matches the already recorded key-content, the computer for the online storage system 18 sends the account information, including the account name and the password, as the recorded account information to the home storage system 10.

Subsequently, the computer for the home storage system 10 performs the login function 28 (S259), sets and records the received account name and password as the account information, attaches the set account information to the login request, and sends both to the online storage system 18. The computer for the online storage system 18 performs the account authentication function 66 (S260); and if the transferred account information matches the recorded account information, the computer sends information indicating the success in authentication to the home storage system 10.

Then, the computer for the home storage system 10 performs the restoration function 38 (S261) and sends a restoration request to the online storage system 18. Subsequently, the computer for the online storage system 18 performs the restoration server function 74 (S262) and executes processing for restoring the content of the home storage system 10; and the home storage system 10 then returns to the pre-failure state (S263).

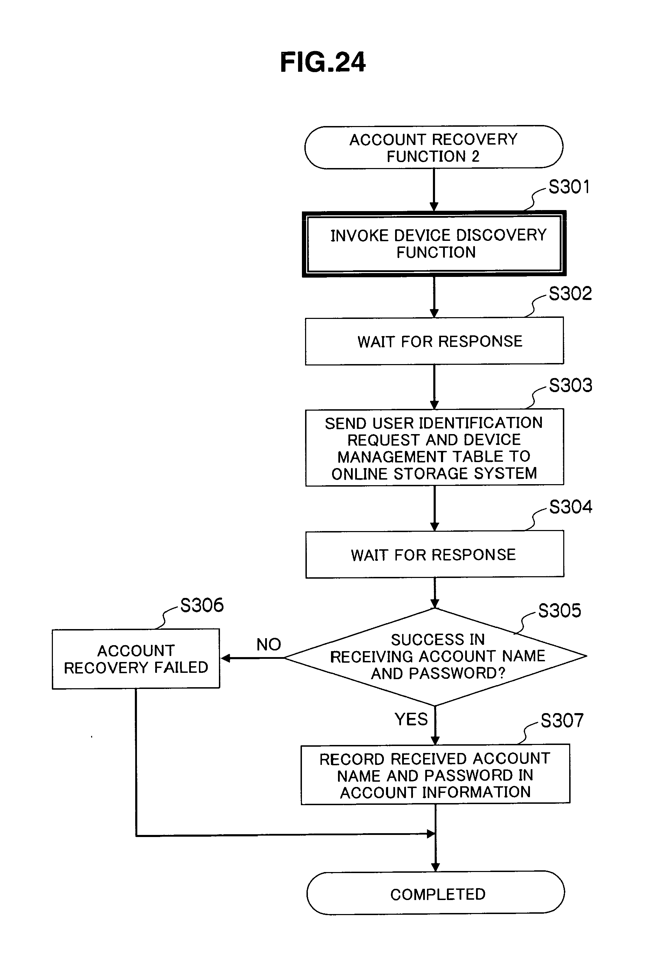

Next, another method for performing the account recovery function 32 will be explained below following the flowchart in Fig. 24. The computer for the home storage system 10 first executes processing for invoking the device discovery function 32 (S301), then executes the response-waiting processing (S302), sends a user identification request together with the device management table 42 information to the online storage system 18 (S303), and then executes the response-waiting processing (S304).

Subsequently, the computer for the home storage system 10 judges, based on the response information from the online storage system 18, whether or not the account information including the account name and the password has been successfully received (S305). If the receipt of the account information failed, the computer executes account recovery failure processing (S306); or if the account information was successfully received, the computer records the received account name and password as the account information (S307), and then terminates the processing in this routine.

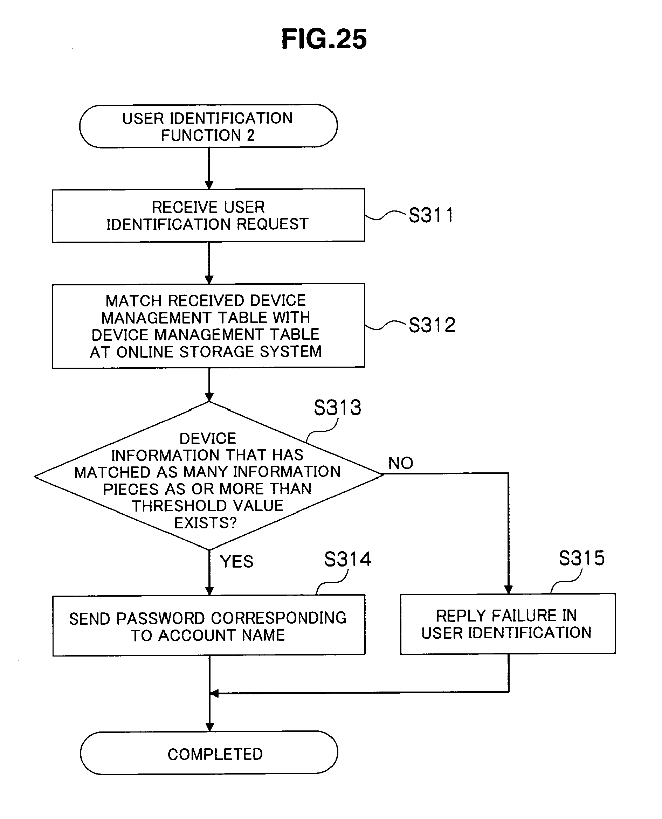

Next, another method for performing the user identification function 68 will be explained below following the flowchart in Fig. 25.

When performing the user identification function 68, the computer for the online storage system 18 receives a user identification request from the home storage system 10 (S311), executes processing for matching the device management table 42 information received from the home storage system 10 with the device management table 82 information in the online storage system 18 (S312), and judges whether or not device information that has matched as many information pieces as or more than a threshold value exists in both the tables (S313). If such device information about the relevant device exists, the computer sends the account name and its corresponding password to the home storage system 10 (S314); or if such device information does not exist, the computer sends response information indicating that user identification has failed to the home storage system 10 (S315), and then terminates the processing in this routine.

According to this embodiment, if the account information exists in the storage unit 22 when making an authentication request, the home storage system 10 attaches the set account information (the account information that has already been set) to the authentication request and transfers both to the online storage system 18. If the account information does not exist in the storage unit 22, the home storage system 10 executes processing for prompting the user to select account recovery; and if the account recovery is not selected by the user as a result of the selection-prompting processing, the home storage system 10 executes processing for prompting the user to input the account information, attaches the account information, which is input by the user as a result of the input-prompting processing, to the authentication request and transfers both to the online storage system 18; or if the account recovery is selected by the user as a result of the selection-prompting processing, the home storage system 10 executes the account recovery by collecting the content of the digital camera 12, attaches the collected content to the authentication request, and transfers both to the online storage system 18.

Meanwhile, if the transferred content matches the key-content already recorded as the authentication information, the online storage system 18 transfers, in response to the authentication request, the account information recorded as the authentication information to the home storage system 10.

According to this embodiment described above, if the account information does not exist in the storage unit 22 due to, for example, replacement with a new device, when making an authentication request, the home storage system 10 executes the account recovery by collecting content which is information about the relevant device, and transfers it to the online storage system 18; and if the content collected by the home storage system 10 matches key-content recorded as authentication information, the online storage system 18 transfers the account information recorded as the authentication information to the home storage system 10. As a result, the home storage system 10 can execute processing (user identification) for authenticating a user who utilizes the home storage system 10, by using the account information transferred from the online storage system 18.

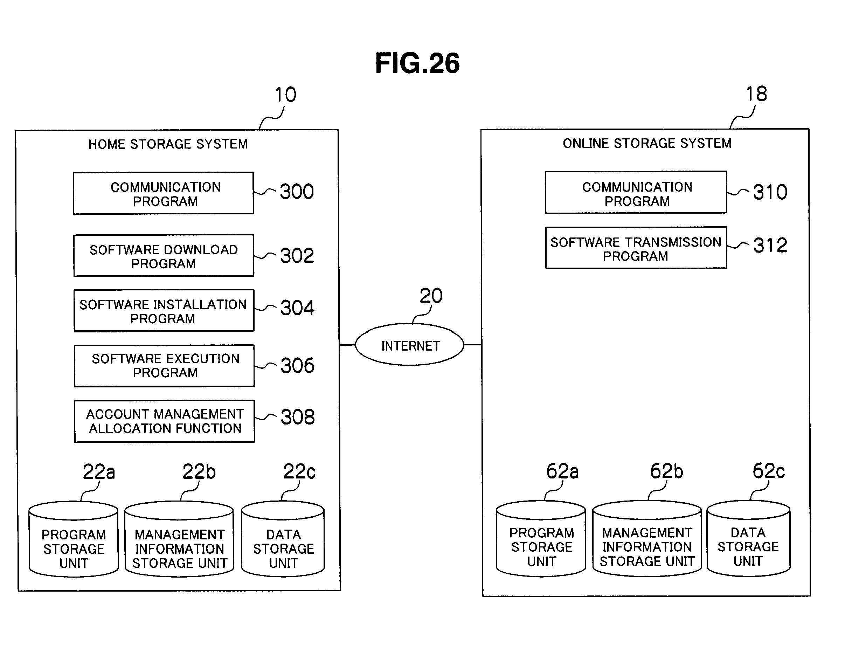

Next, a content transfer system according to the second embodiment of the invention will be explained below with reference to Fig. 26.

The home storage system 10 according to the second embodiment has, in addition to the functions and programs used in the first embodiment, a communication program 300, a software download program 302, a software installation program 304, a software execution program 306, and an account management allocation function 308; and the home storage system 10 is also equipped with, in addition to the storage unit 22, a program storage unit 22a, a management information storage unit 22b, and a data storage unit 22c.

The online storage system 18 according to the second embodiment has, in addition to the programs and functions used in the first embodiment, a communication program 310 and a software transmission program 312; and the online storage system 18 is also equipped with, in addition to the storage unit 62, a program storage unit 62a, a management information storage unit 62b, and a data storage unit 62c. Incidentally, the program storage unit 62a stores an account management and login program with an account recovery function.

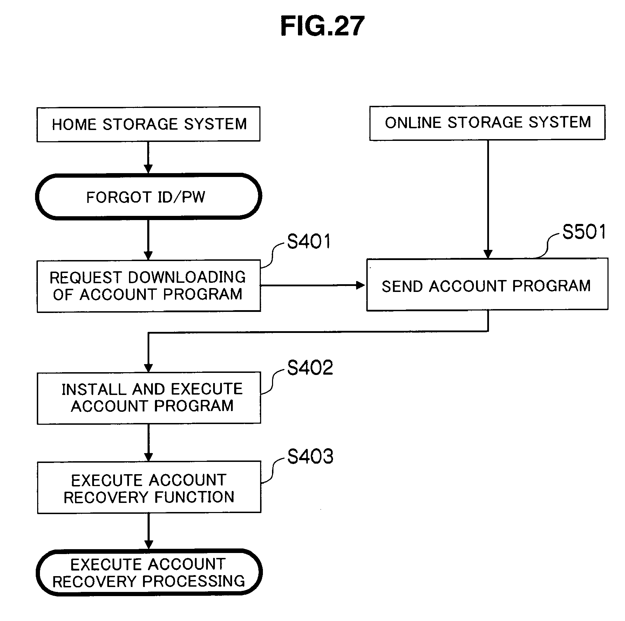

Next, the operation of this embodiment will be explained below following the flowchart in Fig. 27. If the user using the home storage system 10 has forgotten the account name and the password, the computer for the home storage system 10 starts processing. Specifically speaking, the computer executes processing for prompting the user to input the account information; and if the account information is not input by the user as a result of the input-prompting processing, the computer then makes an account program downloading request to the online storage system 18 (S401).

After receiving this request, the computer for the online storage system 18 sends an account program, such as the account management and login program with the account recovery function, to the home storage system 10 (S501). Subsequently, the computer for the home storage system 10 executes a software installation program 304, installs the account program (S402), executes the account recovery function (S403), and then executes processing in accordance with the account recovery function 30.

According to this embodiment, the home storage system 10 can download programs from the online storage system 18 and enhance the functions of the home storage system 10. Also, by distributing the processing according to this embodiment as programs to other home storage systems, those other home storage systems can provide an easy user identification service based on the distributed programs.

While the invention has been described with respect to a limited number of embodiments, those skilled in the art, having benefit of this disclosure, will appreciate that other embodiments can be devised that do not depart from the scope of the invention as disclosed herein. Accordingly, the scope of the invention should be limited only by the attached claims.

## Claims

1. A content transfer system comprising:
a first storage system for managing and recording first content obtained from a first device; and
a second storage system for recording second content, managing the first content, and exchanging information with the first storage system via a communication network;
wherein if account information does not exist when making an authentication request, and if the account information is not input, the first storage system collects information relating to the first device, attaches the collected information to the authentication request, and transfers both to the second storage system; and
wherein the second storage system judges, in response to the authentication request, whether or not the information attached to the authentication request matches authentication recorded information corresponding to the first storage system; and then transfers the judgment result to the first storage system.

2. The content transfer system according to claim 1, wherein when making a backup request, the first storage system attaches backup target content from among the first content to the backup request and transfers both to the second storage system; and if account information does not exist when making the authentication request, and if the account information is not input, the first storage system collects content relating to the first device, attaches the collected content to the authentication request, and transfers both to the second storage system; and
wherein the second storage system records the backup target content attached to the backup request in response to the backup request, determines and records key-content as the authentication information based on the recorded backup target content, judges, in response to the authentication request, whether or not the content transferred from the first storage system matches the recorded content, and then transfers the judgment result to the first storage system.

3. The content transfer system according to claim 1, wherein if account information does not exist when making the authentication request, the first storage system executes processing for prompting a user to select account recovery; and if account recovery is not selected by the user as a result of the selection-prompting processing, the first storage system executes processing for prompting the user to input the account information, and attaches the account information, which is input by the user as a result of the input-prompting processing, to the authentication request and transfers both to the second storage system.

4. The content transfer system according to claim 1, wherein when making a backup request, the first storage system attaches backup target content from among the first content to the backup request and transfers both to the second storage system; and if account information does not exist when making the authentication request, the first storage system executes processing for prompting a user to select account recovery; and if account recovery is selected by the user as a result of the selection-prompting processing, the first storage system executes account recovery processing by collecting content of the first device, attaches the collected content to the authentication request, and transfers both to the second storage system; and
wherein the second storage system records the backup target content attached to the backup request in response to the backup request, determines and records key-content as the authentication information based on the recorded backup target content, judges, in response to the authentication request, whether or not the content transferred from the first storage system matches the recorded content, and then transfers the judgment result to the first storage system.

5. The content transfer system according to claim 1, wherein when making a backup request, the first storage system attaches backup target content from among the first content to the backup request and transfers both to the second storage system; and if account information does not exist when making the authentication request, the first storage system executes processing for prompting a user to select account recovery; and if account recovery is not selected by the user as a result of the selection-prompting processing, the first storage system executes processing for prompting the user to input the account information, and attaches the account information, which is input by the user as a result of the input-prompting processing, to the authentication request and transfers both to the second storage system; and if account recovery is selected by the user as a result of the selection-prompting processing, the first storage system executes account recovery processing by collecting content of the first device, attaches the collected content to the authentication request, and transfers both to the second storage system; and
wherein the second storage system records the backup target content attached to the backup request in response to the backup request, determines and records key-content as the authentication information based on the recorded backup target content, and judges, in response to the authentication request, whether or not the content transferred from the first storage system matches the recorded content; and if an affirmative judgment is returned, the second storage system transfers the account information, which is recorded as the authentication information, to the first storage system.

6. . A method for transferring content between a first storage system and a second storage system,
the first storage system for managing and recording first content obtained from a first device, and
the second storage system for recording second content, managing the first content, and exchanging information with the first storage system via a communication network, and
the content transfer method comprising:
steps executed by the first storage system of, if account information does not exist when the first storage system makes an authentication request, and if the account information is not input, collecting information relating to the first device; and attaching the information collected in the above step to the authentication request and transferring both to the second storage system; and
steps executed by the second storage system of judging, in response to the authentication request, whether or not the information attached to the authentication request matches authentication information recorded corresponding to the first storage system; and then transferring the judgment result in the above step to the first storage system.

7. The content transfer method according to claim 6, wherein when making a backup request, the first storage system executes a step of attaching backup target content from among the first content to the backup request and transferring both to the second storage system; and if account information does not exist when making the authentication request, and if the account information is not input, the first storage system executes a step of collecting content relating to the first device, a step of attaching the content collected in the above step to the authentication request and transferring both to the second storage system; and
wherein the second storage system executes a step of recording the backup target content attached to the backup request in response to the backup request, a step of determining and recording key-content as the authentication information based on the backup target content recorded in the above step, a step of judging, in response to the authentication request, whether or not the content transferred from the first storage system matches the recorded content, and then a step of transferring the judgment result in the above judgment step to the first storage system.

8. The content transfer method according to claim 6, wherein if account information does not exist when making the authentication request, the first storage system executes a step of executing processing for prompting a user to select account recovery; and if account recovery is not selected by the user as a result of the selection-prompting processing in the above step, the first storage system executes a step of executing processing for prompting the user to input the account information, and a step of attaching the account information, which is input by the user as a result of the input-prompting processing, to the authentication request and transferring both to the second storage system.

9. The content transfer method according to claim 6, wherein when making a backup request, the first storage system executes a step of attaching backup target content from among the first content to the backup request and transfers both to the second storage system; and if account information does not exist when making the authentication request, the first storage system executes a step of executing processing for prompting a user to select account recovery; and if account recovery is selected by the user as a result of the selection-prompting processing, the first storage system executes a step of executing account recovery processing by collecting content of the first device and a step of attaching the content collected in the above step to the authentication request and transferring both to the second storage system; and
wherein the second storage system executes a step of recording the backup target content attached to the backup request in response to the backup request, a step of determining and recording key-content as the authentication information based on the backup target content recorded in the above step, a step of judging, in response to the authentication request, whether or not the content transferred from the first storage system matches the recorded content, and then a step of transferring the judgment result in the above judgment step to the first storage system.

10. The content transfer method according to claim 6, wherein when making a backup request, the first storage system executes a step of attaching backup target content from among the first content to the backup request and transferring both to the second storage system; and if account information does not exist when making the authentication request, the first storage system executes a step of executing processing for prompting a user to select account recovery; and if account recovery is not selected by the user as a result of the selection-prompting processing in the above step, the first storage system executes a step of executing processing for prompting the user to input the account information, and a step of attaching the account information, which is input by the user as a result of the input-prompting processing in the above step, to the authentication request and transferring both to the second storage system; and if account recovery is selected by the user as a result of the selection-prompting processing, the first storage system executes a step of executing account recovery processing by collecting content of the first device, and a step of attaching the content collected in the above step to the authentication request and transferring both to the second storage system; and
wherein the second storage system executes a step of recording the backup target content attached to the backup request in response to the backup request, a step of determining and recording key-content as the authentication information based on the backup target content recorded in the above step, and a step of judging, in response to the authentication request, whether or not the content transferred from the first storage system matches the recorded content; and if an affirmative judgment is returned in the above judgment step, the second storage system executes a step of transferring the account information, which is recorded as the authentication information, to the first storage system.

11. A home server comprising:
a storage system for recording content obtained from a device; and
a computer for managing the content and exchanging information with a management server via a communication network;
wherein if account information does not exist when making an authentication request, and if the account information is not input, the computer collects information relating to the device, attaches the collected information to the authentication request, and transfers both to the management server.

12. The home server according to claim 11, wherein when making a backup request, the computer attaches backup target content from among the content to the backup request and transfers both to the management server; and if account information does not exist when making the authentication request, and if the account information is not input, the computer collects content relating to the device, attaches the collected content to the authentication request, and transfers both to the management server.

13. The home server according to claim 11, wherein if account information does not exist when making the authentication request, the computer executes processing for prompting a user to select account recovery; and if account recovery is not selected by the user as a result of the selection-prompting processing, the computer executes processing for prompting the user to input the account information, and attaches the account information, which is input by the user as a result of the input-prompting processing, to the authentication request and transfers both to the management server.

14. The home server according to claim 11, wherein when making a backup request, the computer attaches backup target content from among the content to the backup request and transfers both to the management server; and if account information does not exist when making the authentication request, the computer executes processing for prompting a user to select account recovery; and if account recovery is selected by the user as a result of the selection-prompting processing, the computer executes account recovery processing by collecting content of the device, attaches the collected content to the authentication request, and transfers both to the management server.

15. The home server according to claim 11, wherein when making a backup request, the computer attaches backup target content from among the content to the backup request and transfers both to the management server; and if account information does not exist when making the authentication request, the computer executes processing for prompting a user to select account recovery; and if account recovery is not selected by the user as a result of the selection-prompting processing, the computer executes processing for prompting the user to input the account information, and attaches the account information, which is input by the user as a result of the input-prompting processing, to the authentication request and transfers both to the management server; and if account recovery is selected by the user as a result of the selection-prompting processing, the computer executes account recovery processing by collecting content of the device, attaches the collected content to the authentication request, and transfers both to the management server.
